# EUROPÄISCHE PATENTSCHRIFT

(11) **EP 1 051 278 B1**
(45) Veröffentlichungstag und Bekanntmachung des Hinweises auf die Patenterteilung: **17.04.2002**
(21) Anmeldenummer: 99906184.9
(22) Anmeldetag: 21.01.1999
(51) Int. Cl.: B23K 1/00, B23K 3/06, F01N 3/28

(54) **VERFAHREN ZUM BELOTEN EINER ANORDNUNG**
METHOD FOR INTRODUCING SOLDER INTO A SYSTEM
PROCEDE POUR EFFECTUER UN BRASAGE DANS UN DISPOSITIF

(30) Priorität: 27.01.1998 DE 19803012
(43) Veröffentlichungstag der Anmeldung: 15.11.2000
(73) Patentinhaber: Emitec Gesellschaft für Emissionstechnologie mbH, 53797 Lohmar (DE)
(72) Erfinder: WIERES, Ludwig, D-51491 Overath (DE)
(74) Vertreter: Kahlhöfer, Hermann, Dipl.-Phys.
(86) Internationale Anmeldenummer: EP9900390
(87) Internationale Veröffentlichungsnummer: WO9937432

(56) Entgegenhaltungen:
- EP-A- 0 590 596
- DE-A- 2 924 592
- US-A- 5 593 646
- PATENT ABSTRACTS OF JAPAN vol. 018, no. 525 (C-1257), 5. Oktober 1994 & JP 06 182223 A (NIPPON STEEL CORP), 5. Juli 1994
- PATENT ABSTRACTS OF JAPAN vol. 018, no. 525 (C-1257), 5. Oktober 1994 & JP 06 182222 A (NIPPON STEEL CORP), 5. Juli 1994

## Beschreibung

Die vorliegende Erfindung betrifft ein Verfahren zum Beloten einer Anordnung, die einen in einem Mantelrohr angeordneten Wabenkörper enthält.

Wabenkörper, die durch Stapeln und/oder Wickeln von Blechlagen, von denen zumindest ein Teil strukturierte Blechlagen sind, sind in vielfältigen Formen bekannt. Solche Wabenkörper werden beispielsweise als Trägerkörper für katalytisch wirkende Beschichtungen verwendet. Derartig beschichtete Wabenkörper werden beispielsweise als Katalysatorträgerkörper eingesetzt. Insbesondere für Verbrennungskraftmaschinen, wie sie beispielsweise bei Kraftfahrzeugen verwendet werden, bilden die Wabenkörper mit dem Mantelrohr ein Teil eines Abgassystems. Unterschiedliche Ausgestaltungen einer Anordnung als Katalysator-Trägerkörper sind beispielsweise in der EP-A1-0 245 738 beschrieben.

Die gestapelten und/oder gewickelten Blechlagen werden untereinander wenigstens teilweise verlötet, so daß ein monolithischer Wabenkörper entsteht. Es ist bekannt, daß der Wabenkörper wenigstens teilweise mit einem Mantelrohr, in dem er angeordnet ist, verlötet wird. Hierzu wird Lot in die Lötbereiche der Blechlagen und des Mantelrohres eingebracht.

Verfahren zum Aufbringen eines Haftmittels und Beloten einer metallischen Anordnung enthaltend einen Wabenkörper und ein Mantelrohr sind beispielsweise durch die WO 89/11938, WO 94/06594, WO 93/25339 und die DE-A1 29 24 592 bekannt.

Aus dem Stand der Technik ist bekannt, daß der Wabenkörper wenigstens teilweise mit einem Haftmittel versehen wird, an dem ein Lotpulver haftet. Die aus dem Stand der Technik bekannten Verfahren unterscheiden sich hinsichtlich der Verfahrensführung durch die Abfolge der Aufbringung eines Haftmittels und eines Lotpulvers während oder nach der Ausbildung des Wabenkörpers. Eine ausführliche Darlegung des Standes der Technik enthält die WO 89/11938.

Die unterschiedlichen Verfahrensführungen bezüglich der Belotung einer Anordnung haben unterschiedliche Vorteile. Angestrebt wird zur wirtschaftlichen Herstellung einer Anordnung jedoch ein Belotungsverfahren, bei dem einerseits ein Lot lediglich in die Bereiche eingebracht wird, in denen eine Lötverbindung entstehen soll und andererseits soll der Belotungsvorgang möglichst schnell und mit einem relativ geringen Aufwand erfolgen.

Die bekannte Anordnung, die einen in einem Mantelrohr angeordneten Wabenkörper umfaßt, ist so ausgebildet, daß das Mantelrohr wenigstens in einem Randabschnitt über den Wabenkörper vorsteht. Mit anderen Worten, der Wabenkörper ist in dem Mantelrohr so angeordnet, daß wenigstens eine Stirnfläche des Wabenkörpers mit Abstand zur benachbarten Stirnfläche des Mantelrohres liegt.

Solche vorstehenden Randabschnitte des Mantelrohres bilden Verbindungsbereiche, so daß die Anordnung mit weiteren Bauteilen oder Elementen verbindbar ist. So kann beispielsweise bei der Verwendung einer solchen Anordnung in einem Abgassystem an dem einen Verbindungsbereich des Mantelrohres ein Diffusor vorgesehen sein, der beispielsweise mit einer Abgasleitung eines Abgassystems einer Verbrennungskraftmaschine verbunden ist. Es ist auch bekannt, daß das Mantelrohr zwei Verbindungsbereiche aufweist, die an dem jeweiligen Ende des Mantelrohres ausgebildet sind, wobei in diesen Verbindungsbereichen im wesentlichen kein Wabenkörper liegt.

Durch den vorstehenden Verbindungsbereich des Mantelrohres ist eine Übertragung der aus dem Stand der Technik bekannten Verfahren zur Belotung einer Anordnung auf eine derartige spezielle Ausgestaltung der Anordnung mit einigen Nachteilen verbunden.

Wird beispielsweise das aus der DE-A1 29 24 592 A1 bekannte Verfahren zur Verbindung des Wabenkörpers mit dem Mantelrohr angewandt, bei dem der Wabenkörper mit dem Mantelrohr in ein Tauchbad enthaltend eine Haftflüssigkeit eingetaucht und anschließend mit pulverförmigen Lot versehen, so werden auch die Verbindungsbereiche des Mantelrohres belotet, ohne daß dies notwendig ist. Die Verbindungsbereiche werden nicht nur auf einer Innenfläche des Mantelrohres sondern auch auf einer Außenfläche des Mantelrohres mit dem Haftmittel versehen. Dies ist unerwünscht, da es hierdurch zu einer Verschleppung des Haftmittels kommt. Insbesondere werden auch die Handhabungsgeräte, die an einer Außenfläche des Mantelrohres greifen, mit dem Haftmittel in Kontakt gebracht. Ein erheblicher Reinigungsaufwand des Handhabungsgerätes ist gegebenenfalls notwendig.

Die weiteren in der DE-A1 29 24 592 beschriebenen Verfahren sind grundsätzlich dazu geeignet, eine Belotung eines Mantelrohres und eines Wabenkörpers zu erreichen, wobei diese Belotungsverfahren relativ aufwendig sind.

Dokument JP-A-06182222, das als nächstliegender Stand der Technik angesehen wird, beschreibt ein Verfahren zum Beloten einer Anordnung, welches umfaßt:
a- Ausbilden eines Wabenkörpers durch Stapeln und oder Wickeln von Blechlagen, von denen zumindest ein Teil strukturierte Blechlagen sind, so daß der Wabenkörper für ein Fluid durchströmbare Kanäle aufweist;
b- Einbringen des Wabenkörpers in das Mantelrohr,
c- Einbringen eines Lotes wenigstens in den Wabenkörper.

Hiervon ausgehend liegt der vorliegenden Erfindung die Aufgabe zugrunde, ein Verfahren zum Beloten einer Anordnung anzugeben, welches die genannten Nachteile des Standes der Technik vermeidet und eine rationelle Fertigung der Anordnung ermöglicht.

Zur Lösung dieser Aufgabe wird ein Verfahren mit den Merkmalen des Anspruchs 1 vorgeschlagen. Vorteilhafte Ausgestaltungen und Weiterbildungen des Verfahrens sind Gegenstand der abhängigen Ansprüche.

Zur Belotung einer Anordnung, welche einen Wabenkörper und ein Mantelrohr umfaßt, wird vorgeschlagen, daß zunächst ein Wabenkörper durch Stapeln und/oder Wickeln von Blechlagen, von denen zumindest ein Teil strukturierte Blechlagen sind, so ausgebildet wird, daß dieser für ein Fluid durchströmbare Kanäle aufweist. Der Wabenkörper wird teilweise in ein Mantelrohr eingebracht. Der aus dem Mantelrohr vorstehende Abschnitt des Wabenkörpers wird stirnseitig in Kontakt mit einer Haftflüssigkeit gebracht. Danach wird der Wabenkörper in das Mantelrohr eingebracht und ein Lot in den Wabenkörper eingebracht.

Dadurch, daß lediglich der aus dem Mantelrohr vorstehende Abschnitt des Wabenkörpers mit einer Haftflüssigkeit in Kontakt gebracht wird, wird vermieden, daß auch das Mantelrohr mit der Haftflüssigkeit in Kontakt kommt. Hierdurch wird erreicht, daß das Mantelrohr haftmittelfrei ist, wodurch das Lotpulver nicht am Mantelrohr anhaftet.

Dadurch, daß das Mantelrohr nicht mit einem Haftmittel versehen wird, ist es auch nicht notwendig, dieses Mantelrohr gegebenenfalls vom Haftmittel zu befreien, um eine Verschleppung des Haftmittels zu vermeiden.

Dadurch, daß der aus dem Mantelrohr vorstehende Abschnitt mit einem Haftmittel in Kontakt gebracht wird, wodurch der Wabenkörper wenigstens teilweise in seiner axialen Richtung mit dem Haftmittel versehen wird, wird auch erreicht, daß der Wabenkörper über seine gesamte Querschnittsfläche mit dem Haftmittel versehen wird, so daß auch Randbereiche des Wabenkörpers einwandfrei mit einem Lotpulver versehen werden können. Hierdurch wird gewährleistet, daß auch im Randbereich des Wabenkörpers bzw. zwischen dem Wabenkörper und dem Mantelrohr eine zuverlässige Lötverbindung ausgebildet werden kann.

Nach einer weiteren vorteilhaften Ausgestaltung des Verfahrens wird vorgeschlagen, daß vor dem Einbringen des Lotes ein dem Abschnitt gegenüberliegender Abschnitt des Wabenkörpers mit einem Haftmittel in Kontakt gebracht wird. Insbesondere bei einer Anordnung, die ein Mantelrohr aufweist, wobei das Mantelrohr an den gegenüberliegenden Endabschnitten jeweils einen Verbindungsbereich aufweist, wird vorgeschlagen, daß der Wabenkörper durch das Mantelrohr hindurchgeschoben wird, so daß ein Abschnitt aus dem Mantelrohr vorsteht. Dieser Abschnitt wird mit der Haftflüssigkeit in Kontakt gebracht. Danach wird der Wabenkörper so in das Mantelrohr eingebracht, daß der Wabenkörper im wesentlichen nicht in den Verbindungsbereichen des Mantelrohres liegt.

Für eine stabile Handhabung der Anordnung wird vorgeschlagen, daß der Wabenkörper so in das Mantelrohr eingebracht wird, daß dieser während der eine oder der andere Abschnitt mit dem Haftmittel in Kontakt gebracht wird, sich über einen wesentlichen Teil seiner axialen Länge im Mantelrohr befindet. Hierdurch weist die Anordnung einen günstig gelegenen Schwerpunkt auf, der ein Umkippen der Anordnung verhindert.

Insbesondere wird vorgeschlagen, daß der Wabenkörper so in das Mantelrohr eingebracht wird, daß dieser wenigstens 1 mm, vorzugsweise 5 mm, aus dem Mantelrohr vorsteht. Diese Erstreckung ist ausreichend um zu verhindern, daß auch das Mantelrohr mit der Haftflüssigkeit in Kontakt kommt.

Der Wabenkörper und das Mantelrohr weisen ein unterschiedliches thermisches Dehnungsverhalten auf. Es wird daher angestrebt, daß eine starre Verbindung zwischen dem Wabenkörper und dem Mantelrohr in den jeweiligen Endbereichen des Wabenkörpers vermieden wird. Liegen keine starren Verbindungen in den jeweiligen Endbereichen des Wabenkörpers mit dem Mantelrohr vor, so werden thermische Spannungen zwischen dem Mantelrohr und dem Wabenkörper vermieden. Durch die WO 96/26805 ist an und für sich bereits bekannt, wie derartige thermische Spannungen durch geeignete Verlötung des Wabenkörpers mit dem Mantelrohr vermieden werden können. Nach einer vorteilhaften Ausgestaltung des erfindungsgemäßen Verfahrens werden thermische Spannungen zwischen Wabenkörper und Mantelrohr dadurch vermieden, daß in das Mantelrohr ein buchsenförmiges Element eingebracht wird, das einen Außenmantel aufweist, der im wesentlichen zur Anlage an ein Teil der Innenmantelfläche des Mantelrohres kommt, und in das der Wabenkörper angeordnet wird. Durch dieses buchsenförmige Element wird ein Verlöten des Wabenkörpers mit dem Mantelrohr verhindert. Das buchsenförmige Element erstreckt sich dabei lediglich über einen Teil der axialen Erstreckung des Mantelrohres und des Wabenkörpers. Das buchsenförmige Element ist vorzugsweise durch eine Folie gebildet.

Fertigungstechnisch bedingt weist ein Mantelrohr eine gewisse Unrundheit auf. Es bestehen auch Toleranzen hinsichtlich der Schwankungen eines Innendurchmessers des Mantelrohres Hierdurch bildet sich zwischen der Innenmantelfläche des Mantelrohres und dem Element ein Spalt. Dadurch, daß der Wabenkörper aus dem Mantelrohr vorstehend mit einem Haftmittel in Kontakt gebracht wird, wird verhindert, daß ein Haftmittel in den Spalt zwischen Element und Mantelrohr gelangt, so daß auch dieser Spalt nach einer Aufbringung eines Lotes im wesentlichen lotfrei bleibt. Hierdurch wird auch erreicht, daß zwischen dem Mantelrohr und dem buchsenförmigen Element keine Lötverbindung entsteht. Andererseits wird erreicht, daß der Wabenkörper bis zum buchsenförmigen Element hin und auch mit dem buchsenförmigen Element verlötet werden kann.

Vorzugsweise wird das buchsenförmige Element mit dem Mantelrohr verbunden, so daß beim Einbringen des Wabenkörpers in das Mantelrohr das buchsenförmige Element eine vorgegebene Stellung beibehält, obwohl der Wabenkörper, der in axialer Richtung des Mantelrohres und somit auch des buchsenförmigen Elementes gedrückt wird und hierdurch eine Kraft auf das buchsenförmige Element in Einführrichtung des Wabenkörpers ausübt. Insbesondere wird vorgeschlagen, daß das Element mit dem Mantelrohr stofflich verbunden wird. Hierbei kann es sich beispielsweise um eine Schweißverbindung handeln. Alternativ oder zusätzlich kann das Element mit dem Mantelrohr verklebt sein. Die Verbindung zwischen dem buchsenförmigen Element und dem Mantelrohr ist vorzugsweise so ausgestaltet, daß die Festigkeit der Verbindung kleiner ist als die Festigkeit einer Verbindung zwischen dem Element und dem Wabenkörper. Insbesondere bei einer Klebeverbindung zwischen dem Element und dem Mantelrohr kann diese bereits während eines Lötprozesses aufgrund der beim Lötprozeß vorherrschenden Temperaturen aufgehoben werden. Dadurch, daß die Verbindung zwischen dem Element und dem Mantelrohr eine geringere Festigkeit aufweist als die Verbindung zwischen dem Element und dem Wabenkörper wird auch sichergestellt, daß thermische Spannungen zwischen dem Mantelrohr und dem Wabenkörper nicht über das Element in den Wabenkörper eingeleitet werden. Vorzugsweise ist das Element aus dem gleichen Werkstoff hergestellt, wie der Wabenkörper bzw. das Mantelrohr. Die Verbindung zwischen dem Element und dem Mantelrohr ist im wesentlichen eine Montageverbindung, durch die sichergestellt werden soll, daß das Element während der Montage, d.h. während des Einbringens des Wabenkörpers in das Mantelrohr, seine Lage nicht verändert.

Um den Wabenkörper in einem axialen Teilbereich des Mantelrohres und mit dem buchsenförmigen Element zu verlöten wird vorgeschlagen, daß wenigstens ein Lotabschnitt ausgebildet wird, der das Mantelrohr und das Element überlappt. Hierbei handelt es sich vorzugsweise um einen in Umfangsrichtung des Mantelrohres betrachtet, geschlossenen Lotabschnitt.

Nach einer weiteren vorteilhaften Ausgestaltung des Verfahrens wird vorgeschlagen, daß der mit einem Haftmittel zu benetzende Abschnitt mit einer Aufbringeinrichtung, die das Haftmittel enthält, in Kontakt gebracht wird, wobei die Aufbringeinrichtung eine Benetzungsfläche aufweist, die größer ist als eine Stirnfläche des Abschnitts und diese vollständig überlappt. Durch diese vorteilhafte Weiterbildung des Verfahrens wird erreicht, daß der Abschnitt des Wabenkörpers über seine gesamte Querschnittsfläche mit einem Haftmittel in Kontakt gebracht werden kann. Der Vorteil dieser Verfahrensführung ist auch darin zu sehen, daß zur Benetzung von Wabenkörpern, die unterschiedliche Querschnittsflächen aufweisen, die gleiche Aufbringeinrichtung verwendet werden kann. Es ist daher nicht notwendig, die Aufbringeinrichtung an unterschiedliche Querschnittsgeometrien von Wabenkörpern anzupassen.

Vorteilhafterweise wird die Anordnung im wesentlichen in einer vertikalen Lage, d.h. die Längsachse des Wabenkörpers verläuft im wesentlichen vertikal, mit dem Haftmittel in Kontakt gebracht. Die Aufbringeinrichtung kann für die Kontaktierung des Abschnitts des Wabenkörpers unterhalb des Wabenkörpers angeordnet sein. Bevorzugt wird eine Verfahrensführung, bei der die Aufbringeinrichtung oberhalb des Mantelrohres angeordnet ist und der Abschnitt mit der Aufbringeinrichtung in Kontakt gebracht wird.

Bei solch einer Anordnung der Aufbringeinrichtung fließt das Haftmittel auch aufgrund der Schwerkraft in den Abschnitt hinein. In Abhängigkeit von der Kontaktzeit des Abschnittes mit der Aufbringeinrichtung und/oder von der Verweilzeit des Wabenkörpers in dieser vertikalen Position kann auch erreicht werden, daß das Haftmittel über die gesamte axiale Länge des Wabenkörpers oder über einen Teil der axialen Länge des Wabenkörpers in diesen eingebracht wird. Um den Wabenkörper in für eine Lötverbindung relevanten Bereichen mit einem Haftmittel über seine gesamte axiale Länge zu versehen, ist es nicht notwendig, daß dieser entsprechend lange an der Aufbringeinrichtung verweilt. Es ist ausreichend, wenn der Abschnitt solange mit der Aufbringeinrichtung, insbesondere mit dem Haftmittel, in Kontakt verbleibt, bis hinreichend viel Haftmittel in die einzelnen Kanäle des Wabenkörpers gelangt, so daß eine hinreichende Benetzung der für die Ausbildung einer Lötverbindung relevanten Bereiche mit dem Haftmittel erfolgt. Durch diese Verfahrensführung ist es auch nicht mehr notwendig, den Wabenkörper beidseitig mit einem Haftmittel in Kontakt zu bringen. Insbesondere kann die Zeit, die für einen Transport der Anordnung von einer Benetzungsstation, in der das Haftmittel in den Wabenkörper eingebracht wird, zu einer Belotungsstation, in der ein Lotpulver in den Wabenkörper eingebracht wird, notwendig ist, für einen selbsttätigen Transport des Haftmittels innerhalb des Wabenkörpers genutzt werden, wenn dieser in seiner vertikalen Stellung transportiert wird.

Insbesondere bei der Aufbringung eines Haftmittels mittels einer oberhalb des Wabenkörpers angeordneten Aufbringeinrichtung ist es zweckmäßig, wenn der Haftmittelträger im wesentlichen elastisch und saugfähig ausgebildet ist. Wird beispielsweise der Abschnitt gegen den Haftmittelträger, der das Haftmittel enthält, gedrückt, so wird erreicht, daß das Haftmittel aus dem Haftmittelträger heraustritt und in den Abschnitt eintritt. Es ist auch möglich, den Haftmittelträger gegen den Abschnitt des Wabenkörpers zu drüken. Alternativ können Anordnung und Haftmittelträger relativ zueinander so bewegt werden, daß diese gegeneinander drücken.

Bei einer seriellen Belotung von Wabenkörpern werden aufeinanderfolgend die einzelnen Wabenkörper mit dem Haftmittelträger in Kontakt gebracht. Werden diese Wabenkörper gegen den Haftmittelträger gedrückt, so besteht die Gefahr, daß der Haftmittelträger aufgrund von Materialermüdungserscheinungen einen Strukturverlust erfährt, der dazu führen kann, daß keine ausreichende Einbringung eines Haftmittels in den Abschnitt erfolgt. Dies kann dazu führen, daß nicht genügend Haftmittel zur Verfügung gestellt wird, an dem ein Lotpulver haften bleibt. Um sicherzustellen, daß ausreichend Haftmittel in den Abschnitt des Wabenkörpers eingebracht werden kann, wird vorgeschlagen, daß sich während eines Kontaktes eines Abschnittes mit dem Haftmittelträger oder mit dem Haftmittel entstehende Kontaktflächen bei wenigstens zwei aufeinanderfolgenden Anordnungen nur teilweise überlappen. Diesem Vorschlag liegt die Überlegung zugrunde, daß der Haftmittelträger nicht an denselben Stellen durch aufeinanderfolgende Anordnungen kontaktiert wird, wodurch der Haftmittelträger wenigstens teilweise nicht an denselben Stellen beansprucht wird, so daß eine Materialermüdung des Haftmittelträgers nicht oder nur sehr verzögert eintreten kann.

Weitere Einzelheiten und Vorteile des Verfahrens werden anhand der in der Zeichnung dargestellten Verfahrensabschnitte und einer Anordnung erläutert. Es zeigen:
- Fig. 1: im Schnitt ein Mantelrohr mit einem Element und einem Lotabschnitt,
- Fig. 2: eine Anordnung während einer Aufbringung einer Haftflüssigkeit,
- Fig. 3: ein Einbringen des Wabenkörpers in das Mantelrohr,
- Fig. 4: ein Aufbringen einer Haftflussigkeit am zweiten Abschnitt des Wabenkörpers,
- Fig. 5: Einbringen eines Lotes in den Wabenkörper und
- Fig. 6: vergrößert einen Randbereich der Anordnung.

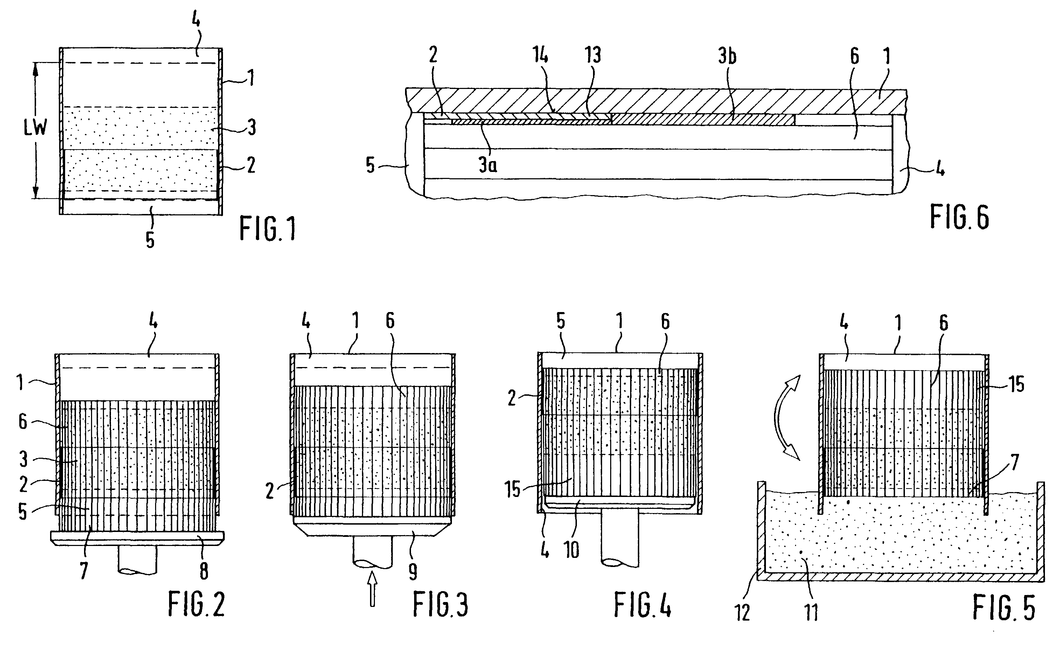

Fig. 1 zeigt im Schnitt ein Mantelrohr 1. Das Mantelrohr 1 weist vorzugsweise einen im wesentlichen kreisförmigen Querschnitt auf. An den jeweiligen Endabschnitten des Mantelrohres 1 sind Verbindungsbereiche 4, 5 ausgebildet. Die Verbindungsbereiche 4, 5 sind durch die gestrichelten Linien gekennzeichnet. Diese Verbindungsbereiche 4, 5 sind zur Verbindung der Anordnung mit weiteren Komponenten, die nicht dargestellt sind, vorgesehen. Insbesondere kann ein jeder Verbindungsbereich 4, 5 mit einer Komponente eines Abgassystems einer Verbrennungskraftmaschine verbunden werden.

Der zwischen den Verbindungsbereichen 4, 5 liegende axiale Abschnitt des Mantelrohres 1 weist eine Länge LW auf, die im wesentlichen der axialen Erstreckung eines Wabenkörpers entspricht.

In dem Mantelrohr 1 ist ein buchsenförmiges Element 2 eingebracht. Das buchsenförmige Element 2 weist einen Außenmantel 13 auf, der im wesentlichen zur Anlage an einen Teil der Innenmantelfläche 14 des Mantelrohres 1 kommt, wie dies insbesondere aus der Fig. 6 ersichtlich ist. Das buchsenförmige Element 2 ist vorzugsweise in Umfangsrichtung betrachtet ringförmig ausgebildet. Wie aus der Darstellung nach Fig. 1 und insbesondere nach Fig. 6 ersichtlich ist, erstreckt sich das buchsenförmige Element 2 über einen Teil der axialen Erstreckung des Mantelrohres 1. Die axiale Erstrekung des buchsenförmigen Elementes 2 ist kleiner als die axiale Erstreckung eines Wabenkörpers 6, wie dies aus der Fig. 6 ersichtlich ist.

Das buchsenförmige Element 2 ist mit dem Mantelrohr 1 verbunden. Mit dem Bezugszeichen 3 ist ein Lotabschnitt bezeichnet, der teilweise das Mantelrohr 1 und das buchsenförmige Element 2 überlappt. Der Lotabschnitt 3 weist einen ersten Abschnitt 3a auf, der im wesentlichen der axialen Erstreckung des Elementes 2 entspricht. An den Lotabschnitt 3a schließt sich ein Lotabschnitt 3b an, der sich in Richtung des Verbindungsbereiches 4 erstreckt.

Durch den Abschnitt 3a des Lotabschnittes 3 findet eine Lotverbindung zwischen dem Wabenkörper 6 und dem Element 2 statt. Durch den Lotabschnitt 3b wird der Wabenkörper 6 mit dem Mantelrohr 1 verbunden. Zumindest die axiale Erstreckung des Elementes 2 bildet eine Kompensationsstrecke, durch die unterschiedliche thermische Dehnungen vom Mantelrohr 1 und vom Wabenkörper 6 kompensiert werden können. Es kann auch ein Lotabschnitt 3 vorgesehen sein, der sich über die gesamte Länge LW erstreckt.

In das Mantelrohr 1 mit dem buchsenförmigen Element 2 wird ein Wabenkörper 6 eingebracht. Der Wabenkörper 6 wird so in das Mantelrohr 1 eingebracht, daß ein Abschnitt 7 aus dem Mantelrohr 1 vorsteht, wie dies aus der Fig. 2 ersichtlich ist. Der Abschnitt 7 des Wabenkörpers 6 wird mit einem nicht dargestellten Haftmittel, insbesondere einer Haftflüssigkeit, in Kontakt gebracht. Die Haftflüssigkeit ist in einer Aufbringeinrichtung 8 bereitgestellt. Es erfolgt eine Benetzung des Wabenkörpers von der Stirnseite her in axialer Richtung des Wabenkörpers 6. Wie insbesondere aus der Fig. 2 ersichtlich ist, ist die Aufbringeinrichtung 8 so ausgestaltet, daß die zur Verfügung stehende Haftmittelfläche größer ist als die Querschnittsfläche des Wabenkörpers 6, so daß eine Benetzung mit einem Haftmittel über den gesamten Querschnitt des Wabenkörpers 6 möglich ist.

Erfolgte eine ausreichende Benetzung des Wabenkörpers mit einer Haftflüssigkeit, so wird der Wabenkörper 6 in das Mantelrohr 1 eingebracht. Die Einbringung des Wabenkörpers 6 erfolgt vorzugsweise mittels eines Stempels 9, durch den eine Kraft in axialer Richtung des Mantelrohres 1 auf den Wabenkörper 6 ausgeübt wird. An dem Mantelrohr 1 greift ein entsprechender Gegenhalter an, der nicht dargestellt ist, und durch den das Mantelrohr 1 gehalten wird. Der Wabenkörper 6 wird soweit in das Mantelrohr 1 eingebracht, daß dieser zwischen den Verbindungsbereichen 4, 5 liegt, wie dies insbesondere aus der Fig. 6 ersichtlich ist.

Fig. 4 zeigt, daß vor einem Einbringen eines Lotes ein dem Abschnitt 7 gegenüberliegender weiterer Abschnitt 15 des Wabenkörpers 6 mit einem Haftmittel in Kontakt gebracht wird. Das Haftmittel wird durch eine Aufbringeinrichtung 10 bereitgestellt. Wie aus der Fig. 4 ersichtlich ist, ist der Querschnitt der Aufbringeinrichtung etwas kleiner als der Querschnitt des Wabenkörpers 6, so daß die Aufbringeinrichtung 10 teilweise in das Mantelrohr 1 eingebracht wird.

Nachdem der weitere Abschnitt 15 mit dem Haftmittel versehen worden ist, wird ein Lotpulver 11 in den Wabenkörper 6 eingebracht. Der Einbringvorgang des Lotes in den Wabenkörper 6 erfolgt derart, daß der Wabenkörper stirnseitig in das Lotpulver eingedrückt wird. Anschließend wird der Wabenkörper mit dem Mantelrohr 1 gewendet und die gegenüberliegende Stirnfläche in das Lotpulver 11 eingedrückt. Das Lotpulver 11 ist in einem Behälter 12 bereitgestellt.

### Bezugszeichenliste

- 1: Mantel
- 2: Element
- 3, 3a, 3b: Lotabschnitt
- 4, 5: Verbindungsbereich
- 6: Wabenkörper
- 7: Abschnitt
- 8: Aufbringeinrichtung
- 9: Stempel
- 10: Aufbringeinrichtung
- 11: Lotpulver
- 12: Behälter
- 13: Außenmantel
- 14: Innenmantelfläche
- 15: Abschnitt

## Patentansprüche

1. Verfahren zum Beloten einer Anordnung, welches umfaßt:
Ausbilden eines Wabenkörpers durch Stapeln und/oder Wickeln von Blechlagen, von denen zumindest ein Teil strukturierte Blechlagen sind, so daß der Wabenkörper (6) für ein Fluid durchströmbare Kanäle aufweist;
teilweises Einbringen des Wabenkörpers (6) in ein Mantelrohr (1);
stirnseitiges Inkontaktbringen des aus dem Mantelrohr (1) vorstehenden Abschnittes (7) des Wabenkörpers (6) mit einem Haftmittel;
Einbringen des Wabenkörpers (6) in das Mantelrohr (1);
Einbringen eines Lotes (11) wenigstens in den Wabenkörper (6).

2. Verfahren nach Anspruch 1, bei dem vor dem Einbringen des Lotes (11) ein dem Abschnitt (7) gegenüberliegender weiterer Abschnitt des Wabenkörpers (6) mit einem Haftmittel in Kontakt gebracht wird.

3. Verfahren nach Anspruch 2, bei dem der Wabenkörper (6) durch das Mantelrohr (1) hindurchgeschoben wird, so daß der weitere Abschnitt aus dem Mantelrohr (1) vorsteht.

4. Verfahren nach Anspruch 1, 2 oder 3, bei dem während einer der Abschnitte (7, 15) mit dem Haftmittel in Kontakt gebracht wird, der Wabenkörper (6) so in das Mantelrohr (1) eingebracht ist, daß dieser sich über einen wesentlichen Teil seiner axialen Länge im Mantelrohr (1) befindet.

5. Verfahren nach Anspruch 4, bei dem der Wabenkörper (6) so in das Mantelrohr (1) eingebracht wird, daß dieser wenigstens 1 mm, vorzugsweise 5 mm, aus dem Mantelrohr (1) vorsteht.

6. Verfahren nach einem der Ansprüche 1 bis 5, bei dem in das Mantelrohr (1) ein buchsenförmiges Element (2) eingebracht wird, das einen Außenmantel (13) aufweist, der im wesentlichen zur Anlage an einen Teil der Innenmantelfläche (14) des Mantelrohres (1) kommt, und in das der Wabenkörper (6) angeordnet wird.

7. Verfahren nach Anspruch 6, bei dem das Element (2) mit dem Mantelrohr (1) verbunden wird.

8. Verfahren nach Anspruch 7, bei dem das Element (2) mit dem Mantelrohr (1) stofflich verbunden wird.

9. Verfahren nach Anspruch 7 oder 8, bei dem das Element (2) mit dem Mantelrohr (1) verklebt wird.

10. Verfahren nach Anspruch 6, bei dem wenigstens ein Lotabschnitt (3) ausgebildet wird, der das Mantelrohr (1) und das Element (2) überlappt.

11. Verfahren nach einem der Ansprüche 1 bis 10, bei dem der Abschnitt (7) mit einer Aufbringeinrichtung (8), die das Haftmittel enthält, in Kontakt gebracht wird, wobei die Aufbringeinrichtung eine Benetzungsfläche aufweist, die größer als eine Stirnfläche des Abschnittes (7) ist und diese vollständig überlappt.

12. Verfahren nach einem der Ansprüche 1 bis 11, bei dem die Anordnung im wesentlichen so vertikal positioniert wird, daß der vorstehende Abschnitt (7) mit einer oberhalb des Mantelrohres (1) angeordneten Aufbringeinrichtung (8), die ein Haftmittel enthält, in Kontakt gebracht wird.

13. Verfahren nach Anspruch 11 oder 12, bei dem wenigstens der Abschnitt (7) gegen einen im wesentlichen elastischen Haftmittelträger gedrückt wird.

14. Verfahren nach Anspruch 13, bei dem die Anordnung und/oder der Haftmittelträger so positioniert werden, daß sich Kontaktflächen, die während eines Kontaktes eines Abschnittes (7) mit dem Haftmittelträger oder dem Haftmittel entstehen, bei wenigstens zwei aufeinanderfolgenden Anordnungen nur teilweise überlappen.

## Claims

1. Method for applying brazing medium to an arrangement, which includes:
configuration of a honeycomb body by stacking and/or winding sheet metal layers, at least some of which are structured sheet metal layers, so that the honeycomb body (6) has channels which a fluid can flow through;
partial placement of the honeycomb body (6) in a jacket tube (1);
contacting the end face of the section (7) of the honeycomb body (6) projecting from the jacket tube (1) with an adhesive medium;
introduction of the honeycomb body (6) in the jacket tube (1);
introduction of a brazing medium (11) at least into the honeycomb body (6).

2. Method according to claim 1, in which prior to the introduction of the brazing medium (11) a further section of the honeycomb body (6) opposite the section (7) is brought into contact with an adhesive medium.

3. Method according to claim 2, in which the honeycomb body (6) is pushed through the jacket tube (1) such that the further section projects from the jacket tube (1).

4. Method according to claim 1, 2 or 3, in which while one of the sections (7, 15) is being brought into contact with the adhesive medium, the honeycomb body (6) is introduced into the jacket tube (1) such that it is located, over a substantial part of the axial length, in the jacket tube (1).

5. Method according to claim 4, in which the honeycomb body (6) is introduced in the jacket tube (1) such that it projects by at least 1 mm, preferably 5 mm, from the jacket tube (1).

6. Method according to one of claims 1 to 5, in which a tubular-shaped element (2) is introduced in the jacket tube (1), which has an outer jacket (13) which substantially comes into contact with a part of the inside jacket surface (14) of de jacket tube (1) and in which the honeycomb body (6) is arranged.

7. Method according to claim 6, in which the element (2) is connected to the jacket tube (1).

8. Method according to claim 7, in which the element (2) is materially connected to the jacket tube (1).

9. Method according to claim 7 or 8, in which the element (2) is glued to the jacket tube (1).

10. Method according to claim 6, in which at least one brazing section (3) is configured, which overlaps the jacket tube (1) and the element (2).

11. Method according to one of claims 1 to 10, in which the section (7) is brought into contact with an applicator device (8), which contains the adhesive medium, wherein the applicator device has a wetting surface which is larger than an end face of the section (7) and which overlaps it completely.

12. Method according to one of claims 1 to 11, in which the arrangement is positioned substantially vertically such that the projecting portion (7) is brought into contact with an applicator device (8) arranged above the jacket tube (1).

13. Method according to claim 11 or 12, in which at least the section (7) is pressed against a substantially elastic adhesive medium carrier.

14. Method according to claim 13, in which the arrangement and/or the adhesive medium carrier are positioned such that contact surfaces, that are formed during contact of a section (7) with the adhesive medium carrier or the adhesive medium, only partially overlap with at least two consecutive arrangements.

## Revendications

1. Procédé d'application d'un agent à braser sur un agencement, le procédé comprenant :
réalisation d'un corps en nids d'abeilles par empilage et/ou enroulement de couches de tôles, dont au moins une partie sont des couches de tôles structurées, de sorte que le corps en nids d'abeilles (6) présente des canaux pouvant être traversés par un fluide ;
introduction partielle du corps en nids d'abeilles (6) dans un tube d'enveloppe (1) ;
mise en contact de la face frontale de la section (7) du corps en nids d'abeilles (6) faisant saillie hors du tube d'enveloppe (1) avec un agent adhésif;
introduction du corps en nids d'abeilles (6) dans le tube d'enveloppe (1) ;
introduction d'un agent à braser (11) au moins dans le corps en nids d'abeilles (6).

2. Procédé selon la revendication 1, dans quel cas avant l'introduction de l'agent à braser (11) une autre section du corps en nids d'abeilles (6) opposée à la section (7) est mise en contact avec l'agent adhésif.

3. Procédé selon la revendication 2, dans quel cas le corps en nids d'abeilles (6) est poussé à travers le tube d'enveloppe (1) de sorte que l'autre section fasse saillie hors du tube d'enveloppe (1).

4. Procédé selon la revendication 1, 2 ou 3, dans quel cas pendant qu'une des sections (7, 15) est mise en contact avec l'agent adhésif, le corps en nids d'abeilles (6) est introduit de telle façon dans le tube d'enveloppe (1) que celui-ci se trouve dans l'enveloppe (1) avec une partie substantielle de sa longueur axiale.

5. Procédé selon la revendication 4, dans quel cas le corps en nids d'abeilles (6) est introduit dans le tube d'enveloppe (1) de telle façon qu'il fait saillie hors du tube d'enveloppe (1) d'au moins 1 mm, de préférence de 5 mm.

6. Procédé selon l'une des revendications 1 à 5, dans quel cas un élément (2) en forme de douille est introduit dans le tube d'enveloppe (1), l'élément (2) en forme de douille présentant une enveloppe extérieure (13) qui vient sensiblement en butée contre une partie de la surface intérieure d'enveloppe (14) du tube d'enveloppe (1), et dans lequel le corps en nids d'abeilles (6) est agencé.

7. Procédé selon la revendication 6, dans quel cas l'élément (2) est relié au tube d'enveloppe (1).

8. Procédé selon la revendication 7, dans quel cas l'élément (2) est relié matériellement au tube d'enveloppe (1).

9. Procédé selon la revendication 7 ou 8, dans quel cas l'élément (2) est collé au tube d'enveloppe (1).

10. Procédé selon la revendication 6, dans quel cas au moins une section d'agent à braser est réalisée qui recouvre le tube d'enveloppe (1) et l'élément (2).

11. Procédé selon l'une des revendications 1 à 10, dans quel cas la section (7) est mise en contact avec un dispositif d'application (8) qui contient l'agent adhésif, le dispositif d'application (8) présentant une surface d'humidification qui est plus grande qu'une surface frontale de la section (7) et qui recouvre celle-ci entièrement.

12. Procédé selon l'une des revendications 1 à 11, dans quel cas l'agencement est sensiblement positionné verticalement de telle façon que la section (7) en saillie est mise en contact avec un dispositif d'application (8) qui contient un agent adhésif et qui est agencé au-dessus du tube d'enveloppe (1).

13. Procédé selon la revendication 11 ou 12, dans quel cas au moins la section (7) est poussée contre un support d'agent adhésif sensiblement élastique.

14. Procédé selon la revendication 13, dans quel cas l'agencement et/ou le support d'agent adhésif est positionné de telle façon que dans le cas d'au moins deux agencements se succédant, des surfaces de contact qui sont créées lors d'un contact d'une section (7) avec le support d'agent adhésif ou avec l'agent adhésif ne se recouvrent que partiellement.
